# EUROPEAN PATENT APPLICATION

(11) **EP 4 401 189 A1**
(43) Date of publication of application: **17.07.2024**
(21) Application number: 22878893.1
(22) Date of filing: 05.10.2022
(51) Int. Cl.: H01M 10/42, H01M 4/38, H01M 10/052, H01M 4/505, H01M 4/525, H01M 4/1395, H01M 4/04

(54) **LITHIUM SECONDARY BATTERY**

(30) Priority: 05.10.2021 KR 20210131946
(71) Applicant: LG Energy Solution, Ltd., Seoul 07335 (KR)
(72) Inventor: PARK, Seung Won, Daejeon 34122 (KR); PARK, Hyun Woo, Daejeon 34122 (KR); KWON, Yo Han, Daejeon 34122 (KR); LEE, Jae Wook, Daejeon 34122 (KR); JUN, Chan Soo, Daejeon 34122 (KR)
(74) Representative: Hoffmann Eitle
(86) International application number: PCT/KR2022/015008
(87) International publication number: WO 2023/059072

(57) **Abstract**

The present invention relates to a lithium secondary battery including a negative electrode including a negative electrode active material, a positive electrode including a positive electrode active material, a separator interposed between the negative electrode and the positive electrode, and an electrolyte, wherein the negative electrode active material includes silicon particles, a Si charge depth represented by Equation 1 below is 30% to 60%, and a Si discharge depth represented by Equation 2 below is 10% or greater. Si charge depth (%) = {(positive electrode loading amount+pre-lithiation capacity of negative electrode)/negative electrode loading amount} ×100 Si discharge depth (%) = {(positive electrode loading amount + pre-lithiation capacity of negative electrode - discharge loading amount)/negative electrode loading amount} ×100

In Equations 1 and 2 above, the positive electrode loading amount indicates capacity per unit area of the positive electrode (unit: mAh/cm²), the negative electrode loading amount indicates capacity per unit area of the negative electrode (unit: mAh/cm²), the pre-lithiation capacity of the negative electrode indicates capacity per unit area (unit: mAh/cm²) of lithium (Li) inserted into the negative electrode through pre-lithiation, and the discharge loading amount indicates a value obtained by dividing discharge capacity of a secondary battery by positive electrode area at discharge cut-off voltage.

## Description

### TECHNICAL FIELD

This application claims priority from Korean Patent Application Nos. 10-2021-0131946, filed on October 5, 2021, and 10-2022-0127248, filed on October 5, 2022, the disclosures of which are incorporated by reference herein.

The present invention relates to a lithium secondary battery, and more particularly, to a lithium secondary battery using silicon (Si) particles as a negative electrode active material.

### BACKGROUND ART

Recently, lithium secondary batteries have been highlighted as an energy source for electric vehicles. The spread of electric vehicles brings with it a rising demand for lithium secondary batteries capable of providing a longer mileage per single charge and shortening the time for quick charging.

Lithium secondary batteries are generally prepared through a method as follows. An electrode assembly is formed by disposing a separator between a positive electrode including a positive electrode active material formed of a transition metal oxide containing lithium and a negative electrode including a negative electrode active material capable of storing lithium ions, inserting the electrode assembly into a battery case, injecting a non-aqueous electrolyte that becomes a medium for delivering lithium ions, and then sealing the battery case. The non-aqueous electrolyte is generally composed of a lithium salt and an organic solvent capable of dissolving the lithium salt. Carbon-based materials such as natural graphite or artificial graphite have been typically used as a negative electrode active material for lithium secondary batteries. However, since the carbon-based negative electrode active materials have small capacity and a low rate of reaction with lithium, secondary batteries to which the carbon-based negative electrode active materials are applied are not capable enough to provide high capacity and quick charging performance.

In response, efforts have been made to develop lithium secondary batteries using a silicon-based negative electrode active material having 10 times higher theoretical capacity compared to a carbon-based material. The silicon-based negative electrode active material has a higher theoretical capacity than the carbon-based material, and has a high rate of reaction with lithium to improve capacity characteristics and quick charging performance, but upon charging, has a rapid volume expansion, which may cause damage to a negative electrode and disconnection of a conductive path, resulting in rapid degradation in battery performance.

Accordingly, there remains a need for development of lithium secondary batteries exhibiting excellent lifespan characteristics even with the use of a silicon-based negative electrode active material.

### DISCLOSURE OF THE INVENTION

### TECHNICAL PROBLEM

An aspect of the present invention provides a lithium secondary battery exhibiting excellent lifespan characteristics as well as high capacity characteristics by using silicon (Si) particles as a negative electrode active material.

### TECHNICAL SOLUTION

According to an aspect of the present invention, there is provided a lithium secondary battery including: a negative electrode including a negative electrode active material; a positive electrode including a positive electrode active material; a separator interposed between the negative electrode and the positive electrode; and an electrolyte, wherein the negative electrode active material includes silicon particles, and a Si charge depth represented by Equation 1 below is 30% to 60%, and a Si discharge depth represented by Equation 2 below is 10% or greater.Si charge depth (%) = {(positive electrode loading amount+ pre-lithiation capacity of negative electrode)/negative electrode loading amount} ×100

In Equation 1 above, the positive electrode loading amount indicates capacity per unit area of the positive electrode (unit: mAh/cm²), the negative electrode loading amount indicates capacity per unit area of the negative electrode (unit: mAh/cm²), and the pre-lithiation capacity of the negative electrode indicates capacity per unit area (unit: mAh/cm²) of lithium (Li) inserted into the negative electrode through pre-lithiation.Si discharge depth (%) = {(positive electrode loading amount + pre-lithiation capacity of negative electrode - discharge loading amount)/negative electrode loading amount} ×100

In Equation 2 above, the positive electrode loading amount indicates capacity per unit area of the positive electrode (unit: mAh/cm²), the negative electrode loading amount indicates capacity per unit area of the negative electrode (unit: mAh/cm²), the pre-lithiation capacity of the negative electrode indicates capacity per unit area (unit: mAh/cm²) of lithium (Li) inserted into the negative electrode through pre-lithiation, and the discharge loading amount indicates a value obtained by dividing discharge capacity of a secondary battery by positive electrode area at discharge cut-off voltage.

### ADVANTAGEOUS EFFECTS

A lithium secondary battery according to the present invention is designed such that Si charge depth and Si discharge depth satisfy specific ranges, and thus exhibits excellent lifespan characteristics in spite of using Si particles as a negative electrode active material. Meanwhile, since Si particles have excellent reactivity with lithium and capacity characteristics compared to carbon-based negative electrode active materials and/or SiOx-based negative electrode active materials, a lithium secondary battery of the present invention to which the Si particles are applied may exhibit excellent capacity characteristics and quick charging performance. That is, the lithium secondary battery according to the present invention exhibits excellent capacity characteristics, lifespan characteristics, and quick charging performance.

In addition, in the lithium secondary battery according to the present invention, as the positive electrode active material, for example, a lithium nickel-based oxide having a Ni content of 60 mol% or more may be applied, and in particular, when the Ni content is 80 mol% or more, the capacity characteristics may be further improved.

### MODE FOR CARRYING OUT THE INVENTION

It will be understood that words or terms used in the specification and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

In the present invention, the term "primary particle" indicates a particle unit having no observable grain boundaries when observed in a visual field of 5000 to 20000 magnification, using a scanning electron microscope. The term "average particle diameter of primary particles" indicates an arithmetic mean value calculated after measuring particle diameters of primary particles observed in scanning electron microscope images.

In the present invention, the term "secondary particle" is a particle in which a plurality of primary particles are aggregated.

In the present invention, the term "average particle diameter D₅₀" indicates a particle size with respect to 50% in the volume accumulated particle size distribution of particle powder to be measured (e.g., positive electrode active material powder, negative electrode active material powder, and the like). The average particle diameter D50 may be measured by using a laser diffraction method. For example, when it comes to measuring the "average particle diameter D50", powder of particles to be measured is dispersed in a dispersion medium, the dispersion medium is introduced into a commercial laser diffraction particle size measurement instrument (e.g., Microtrac MT 3000) and irradiated with ultrasonic waves having a frequency of about 28 kHz and an output of 60 W to obtain a volume accumulated particle size distribution graph, and the particle diameter at 50% of the volume accumulation may then be calculated.

Hereinafter, the present invention will be described in detail.

Si has excellent capacity characteristics and lithium reactivity compared to carbon-based negative electrode active materials such as graphite as well as silicon-based negative electrode active materials such as SiOx and SiC. Therefore, when Si is used as a negative electrode active material, improved energy density and quick charging performance may be obtained. However, since Si has a large volume change upon charging/discharging to cause rapid degradation of a negative electrode upon charging/discharging, when Si is used as a negative electrode active material, satisfactory lifespan characteristics were hardly achieved. As a result of the present inventors' continuous research efforts to improve lifespan characteristics of lithium secondary batteries using Si as a negative electrode active material, the inventors have found out that when batteries are designed such that Si charge depth and Si discharge depth satisfy specific ranges, excellent lifespan characteristics may be obtained even with the use of Si as a negative electrode active material, thereby achieving the present invention.

Specifically, a lithium secondary battery according to the present invention includes a negative electrode including a negative electrode active material; a positive electrode including a positive electrode active material; a separator interposed between the negative electrode and the positive electrode; and an electrolyte, the negative electrode active material includes silicon (Si), Si charge depth represented by Equation 1 below is 30% to 60%, and Si discharge depth represented by Equation 2 below is 10% or greater. Preferably, the negative electrode active material does not include other types of negative electrode active material and may be formed of silicon alone. Si charge depth (%) = {(positive electrode loading amount + pre-lithiation capacity of negative electrode)/negative electrode loading amount} ×100

In Equation 1 above, the positive electrode loading amount indicates capacity per unit area of the positive electrode (unit: mAh/cm²), the negative electrode loading amount indicates capacity per unit area of the negative electrode (unit: mAh/cm²), and the pre-lithiation capacity of the negative electrode indicates capacity per unit area (unit: mAh/cm²) of lithium (Li) inserted into the negative electrode through pre-lithiation. Si discharge depth (%) = {(positive electrode loading amount + pre-lithiation capacity of negative electrode - discharge loading amount)/negative electrode loading amount} ×100

In Equation 2 above, the positive electrode loading amount indicates capacity per unit area of the positive electrode (unit: mAh/cm²), the negative electrode loading amount indicates capacity per unit area of the negative electrode (unit: mAh/cm²), the pre-lithiation capacity of the negative electrode indicates capacity per unit area (unit: mAh/cm²) of lithium (Li) inserted into the negative electrode through pre-lithiation, and the discharge loading amount indicates a value obtained by dividing discharge capacity of a secondary battery by positive electrode area at discharge cut-off voltage.

The Si charge depth is a value indicating the extent of bonding between Si and Li in a fully charged state (i.e., SOC=100), and according to the inventors' research, when the Si charge depth is greater than 60% or less than 30%, lifespan characteristics were turned out to be rapidly deteriorated. Specifically, it was shown that when the Si charge depth was greater than 60%, Si had a rapid volume expansion, resulting in reduced energy density and lifespan characteristics, and when the Si charge depth was less than 30%, reactions became even more ununiform and lifespan characteristics were deteriorated. Preferably, the Si charge depth may be 40% to 60%, and more preferably 50% to 60%.

The Si charge depth may be adjusted by controlling a positive electrode loading amount, a negative electrode loading amount, and/or a pre-lithiation degree of a negative electrode, and the positive electrode loading amount and/or the negative electrode loading amount may be set in consideration of the type and content of active materials used, the porosity of active material layers, and/or the thickness of active material layers.

Meanwhile, the Si discharge depth indicates capacity of lithium remaining in a negative electrode at discharge cut-off voltage. According to the inventors' research, even when the Si charge depth satisfies 30% to 60%, lifespan characteristics are rapidly reduced when the Si discharge depth is less than 10%. Preferably, the Si discharge depth may be 10% to 30%, more preferably 10% to 25%, even more preferably 15% to 25%, and even more preferably 17% to 25%.

The Si discharge depth is affected from a combination of the ratio of negative electrode capacity to positive electrode capacity (N/P ratio), the driving voltage range of batteries, and the pre-lithiation degree of a negative electrode, and may be adjusted by appropriately controlling these factors.

Meanwhile, the lithium secondary battery of the present invention may be designed such that the Si usage range is 10% to 50%, preferably 20% to 40%, and more preferably 30% to 40%. The Si usage range indicates a difference between Si charge depth and Si discharge depth, as shown in Equation 3 below, and when the Si usage range is high, energy density increases, but lifespan characteristics are remarkably deteriorated, and when the Si usage range is too low, energy density decreases. Si usage range (%) = Si charge depth - Si discharge depth

Meanwhile, in the lithium secondary battery according to the present invention, an N/P ratio, which is a percentage of negative electrode loading amount to positive electrode loading amount, may be 150% to 300%, preferably 180% to 300%, and more preferably 190% to 300%. When the N/P ratio, which is the percentage of the negative electrode loading amount to the positive electrode loading amount, is less than the above range, the Si charge depth may increase to cause a decrease in life, and when the N/P ratio is greater than the above range, Si reaction non-uniformity on an electrode surface portion may increase to cause a decrease in life.

The lithium secondary battery according to the present invention designed to satisfy the above conditions may exhibit excellent energy density and quick charging performance using Si particles, and exhibit excellent lifespan characteristics. Specifically, the lithium secondary battery according to the present invention may have an energy density of 500 Wh/L or more, preferably 550 Wh/L or more, more preferably 600 Wh/L or more, and even more preferably 650 Wh/L or more, and also the number of cycles to reach 80% life thereof may be 450 or more, preferably 480 or more, more preferably 500 or more, even more preferably 600 or more, and even further preferably 700 or more.

For example, the lithium secondary battery according to the present invention may have a cell energy density of 500 Wh/L or more with the number of cycles to reach 80% life of 450 or more, or a cell energy density of 550 Wh/L or more with the number of cycles to reach 80% life of 480 or more, or a cell energy density of 650 Wh/L or more with the number of cycles to reach 80% life of 480 or more, or a cell energy density of 550 Wh/L to 600 Wh/L with the number of cycles to reach 80% life of 700 or more.

Hereinafter, each component of the lithium secondary battery according to the present invention will be described in detail.

### Negative electrode

A negative electrode according to the present invention may include silicon (Si) as a negative electrode active material, and preferably, 100% of silicon (Si) may be used as the negative electrode active material. Silicon used in the present invention may be pure silicon (Pure Si) which is not bonded to other metals or oxygen. To be specific, the negative electrode according to the present invention may include a negative electrode collector and a negative electrode active material layer formed on at least one surface of the negative electrode collector, and the negative electrode active material layer may include silicon as a negative electrode active material. Si has excellent capacity characteristics and lithium reactivity compared to carbon-based negative electrode active materials such as graphite as well as silicon-based negative electrode active materials such as SiOx and SiC. Therefore, when Si is used as a negative electrode active material, improved energy density and quick charging performance may be obtained.

The silicon may have an average particle diameter (D50) of 1 um to 10 um, specifically 2 um to 8 µm, and more specifically 3 um to 7 um. When the average particle diameter is less than 5 um, the specific surface area of the particles is excessively increased to cause an excessive increase in viscosity of a negative electrode slurry. Accordingly, the particles constituting the negative electrode slurry are not actively dispersed. In addition, when the size of the silicon particles is too small, a contact area between the silicon particles and conductive materials is reduced by composites formed of a conductive material and a binder in the negative electrode slurry, and accordingly, a conductive network is more likely to be disconnected to reduce capacity retention. Meanwhile, when the average particle diameter is greater than 10 µm, excessively large silicon particles are present to make a surface of the negative electrode uneven, and thus current density becomes ununiform upon charging/discharging. In addition, when the silicon particles are excessively large, phase stability of the negative electrode slurry is not secured to reduce processability. Accordingly, the capacity retention of a battery is reduced.

Meanwhile, the BET specific surface area of the silicon is preferably 0.01 m²/g to 150.0 m²/g, more preferably 0.1 m²/g to 100.0 m²/g, particularly preferably 0.2 m²/g to 80.0 m²/g, and most preferably 0.2 m²/g to 18.0 m²/g. The BET surface area may be measured according to DIN 66131 using nitrogen.

In addition, the silicon may be present in a crystalline or amorphous form, and is preferably not porous. The silicon particles may be spherical particles or fragmented particles, but are not limited thereto, and may have a fibrous structure or may be present in the form of a silicon-containing film or coating.

The silicon may be included in an amount of 50 wt% or more, 60 wt% or more, preferably 65 wt% or more, more preferably 70 wt% or more, and 99 wt% or less, preferably 95 wt% or less, more preferably 90 wt% or less, and even more preferably 80 wt% or less, with respect to a total weight of the negative electrode active material layer.

Meanwhile, the negative electrode according to the present invention may further include other negative electrode active materials in addition to the silicon, as needed. The other negative electrode active materials may be SiOx (0<x<2), a carbon-based negative electrode active material, or the like. In this case, the carbon-based negative electrode active material may be, for example, artificial graphite, natural graphite, graphitized carbon fiber, amorphous carbon, soft carbon, hard carbon, or the like, but is not limited thereto.

The other negative electrode active materials may be included in an amount of 50 wt% or less, preferably 45 wt% or less, and more preferably 30 wt% or less, with respect to the total weight of the negative electrode active material layer.

Meanwhile, the negative electrode active material layer may further include a conductive material and a binder, as needed.

The conductive material may be, for example, spherical or flaky graphite; a carbon-based material such as carbon black, acetylene black, Ketjen black, channel black, furnace black, lamp black, thermal black, carbon fiber, single-walled carbon nanotube, and multi-walled carbon nanotube; metal powder or metal fiber such as copper, nickel, aluminum, and silver; a conductive whisker such as a zinc oxide whisker and a potassium titanate whisker; a conductive metal oxide such as a titanium oxide; or a conductive polymer such as a polyphenylene derivative, and any one thereof or a mixture of two or more thereof may be used. The conductive material may be included in an amount of 0.1 wt% to 40 wt%, 1 wt% to 30 wt%, or 5 wt% to 30 wt%, with respect to a total weight of the negative electrode active material layer.

Preferably, the negative electrode active material layer according to the present invention may include two or more types of conductive materials, and in this case, the conductive material may include a point-type conductive material and a plate-type conductive material.

The point-type conductive material may be used to improve conductivity of a negative electrode, and it is preferable to have conductivity without causing chemical changes. Specifically, the conductive material may be at least one selected from the group consisting of natural graphite, artificial graphite, carbon black, acetylene black, Ketjen black, channel black, furnace black, lamp black, thermal black, conductive fiber, fluorocarbon, aluminum powder, nickel powder, zinc oxide, potassium titanate, titanium oxide, and polyphenylene derivatives, and may preferably include carbon black that has high conductivity and excellent dispersibility.

The point-type conductive material may have a BET specific surface area of 40 m²/g to 70 m²/g, preferably 45 m²/g to 65 m²/g, and more preferably 50 m²/g to 60 m²/g.

The point-type conductive material may have a functional group content (volatile matter) of 0.01% to 0.05%, preferably 0.01% to 0.04%, and more preferably 0.01% to 0.03%.

The functional group content may be controlled according to the extent of heat treatment on the point-type conductive material. That is, in preparing the point-type conductive material, a high functional group content may indicate a great deal of foreign substances, and a low functional group content may indicate greater heat treatment processing, and the point-type conductive material according to the present application is characterized in that the point-type conductive material is partially heat-treated to satisfy the functional group content range.

The point-type conductive material may have a particle size of 10 nm to 100 nm, preferably 20 nm to 90 nm, and more preferably 20 nm to 60 nm.

The plate-type conductive material may serve to improve conductivity by increasing surface contact between silicon particles in the negative electrode, and also serve to suppress disconnection of a conductive path due to volume expansion, and may be indicated as a planar conductive material or a bulk-type conductive material.

The plate-type conductive material may include at least one selected from the group consisting of plate-type graphite, graphene, graphene oxide, and graphite flake, and may preferably be plate-type graphite.

The plate-type conductive material may have an average particle diameter (D50) of 2 um to 7 um, specifically 3 um to 6 µm, and more specifically 4 um to 5 um. When the above range is satisfied, dispersion is easily performed without causing an excessive increase in viscosity of a negative electrode slurry based on a sufficient particle size. Therefore, the dispersion effect is excellent when dispersion is performed using the same equipment and time.

The plate-type conductive material may have a BET specific surface area of 1 m²/g to 500 m²/g, preferably 5 m²/g to 300 m²/g.

In addition, the binder may be, for example, polyvinylidene fluoride (PVDF), a polyvinylidene fluoride-hexafluoropropylene copolymer (PVDF-co-HFP), polyvinyl alcohol, polyacrylic acid, polyacrylamide, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), sulfonated EPDM, styrene-butadiene rubber (SBR), fluorine rubber, or various copolymers thereof, and any one thereof or a mixture of two or more thereof may be used. The binder may be included in an amount of 1 wt% to 20 wt%, 2 wt% to 20 wt%, or 2 wt% to 10 wt%, with respect to a total weight of the negative electrode active material layer.

Meanwhile, the negative electrode may have a multi-layer structure in which a negative electrode active material layer is composed of a single layer or two or more layers. When the negative electrode active material layer has a multi-layer structure composed of two or more layers, each layer may have different types and/or contents of the negative electrode active material, the binder, and/or the conductive material.

For example, the negative electrode according to the present invention may have a two-layer structure, and the type of a negative electrode active material of a layer adjacent to a collector (hereinafter referred to as a lower layer) and the type of a negative electrode active material of an upper layer formed on the lower layer may be different. Specifically, in the negative electrode having a two-layer structure, the negative electrode active material of the lower layer may be silicon, and the negative electrode active material of the upper layer may be SiOx (0<x<2).

Meanwhile, the negative electrode active material layer may have a porosity of 20% to 70% or 20% to 50%. When porosity of the negative electrode active material layer is too small, electrolyte impregnability may be reduced to deteriorate lithium mobility, and when the porosity is too large, energy density may be reduced.

Meanwhile, in the present invention, the negative electrode may be a pre-lithiated negative electrode. For example, pre-lithiation of the negative electrode may be performed through a method of pressing or depositing lithium metal on a negative electrode active material layer, a method of inserting lithium into a negative electrode active material layer through an electrochemical method, a method of inserting a sacrificial positive electrode material included in a positive electrode or excess lithium included in a positive electrode active material into a negative electrode through an activation process, or a method of providing excess lithium to a positive electrode through an electrochemical method or a method of pressing or depositing lithium metal and inserting the excess lithium provided to the positive electrode into a negative electrode through an activation process, and may be performed by combining two or more of the above methods.

When using the pre-lithiated negative electrode as described above, compared to a non-lithiated negative electrode, even upon discharging up to a relatively low cut-off voltage, lifespan characteristics are less deteriorated, and accordingly, the driving voltage range of a lithium secondary battery may be set to a relatively wide range to increase usable SOC.

Preferably, the negative electrode of the present invention may have a pre-lithiation degree, represented by Equation 4, of 5% to 50%, preferably 5% to 30%, and more preferably 10% to 20%. Pre-lithiation degree (%) = {capacity per unit area of Li inserted into negative electrode through pre-lithiation / capacity per unit area of Si} × 100

When the pre-lithiation degree of the negative electrode satisfies the above range, a lithium secondary battery having excellent capacity and lifespan characteristics may be obtained. Specifically, when the pre-lithiation degree of the negative electrode is too small, lifespan characteristics may be deteriorated. The lifespan characteristics may be improved by controlling the discharge depth, but in this case, it is difficult to secure energy density. In addition, when the pre-lithiation degree of the negative electrode is too large, degeneration of silicon particles in an electrode may be accelerated to deteriorate capacity characteristics.

### Positive electrode

A positive electrode according to the present invention includes a positive electrode active material. Specifically, the positive electrode of the present invention may include a positive electrode collector and a positive electrode active material layer formed on at least one surface of the positive electrode collector.

The positive electrode active material layer may include a positive electrode active material and may further include a conductive material and/or a binder, as needed.

As the positive electrode active material, various positive electrode active materials known in the art, such as lithium nickel-based oxide, lithium manganese-based oxide, and lithium cobalt-based oxide may be used. Preferably, the positive electrode active material of the present invention may include a lithium nickel-based oxide in which a molar ratio of nickel among all metals excluding lithium is 60 mol% or more, preferably 80 mol% or more, more preferably 83 mol% or more, and even more preferably 85 mol% or more. Since a lithium nickel-based oxide containing 60 mol% or more of Ni has a high capacity, the lithium nickel-based oxide containing 60 mol% or more of Ni is used as a positive electrode active material, and when Si is used as a negative electrode active material, lithium secondary batteries having remarkably excellent capacity characteristics compared to lithium secondary batteries in the related art may be manufactured.

The lithium nickel-based oxide may be, for example, represented by Formula 1 below.

[Formula 1] Li₁₊ₓ₁[Niₐ₁Co_{b1}Mn_{c1}M¹_{d1}]O₂

In Formula 1 above, M¹ may be at least one selected from the group consisting of Al, B, Co, W, Mg, V, Ti, Zn, Ga, In, Ru, Nb, Sn, Sr, and Zr.

Meanwhile, 1+x1 indicates a molar ratio of lithium in the lithium nickel-based oxide, and may satisfy -0.2≤x1≤0.2, 0.1≤x1≤0.1, or 0≤x1≤0.1.

a1 indicates a molar ratio of nickel among all metals excluding lithium in the lithium nickel-based oxide, and may satisfy 0.6≤a1<1, 0.8≤a1<1, 0.8≤a1≤0.98, 0.82≤a1≤0.98, 0.83≤a1≤0.98, 0.85≤a1≤0.98, 0.88≤a1≤0.98, or 0.90≤a1≤0.98.

b1 indicates a molar ratio of cobalt among all metals excluding lithium in the lithium nickel-based oxide, and may satisfy 0<b1<0.4, 0<b1<0.2, 0<b1<0.18, 0.01≤b1<0.18, 0.01≤bl<0.17, 0.01≤b1<0.15, 0.01≤b1<0.12, or 0.01≤b1≤0.10.

c1 indicates a molar ratio of manganese among all metals excluding lithium in the lithium nickel-based oxide, and may satisfy 0<c1<0.4, 0<c1<0.2, 0<c1<0.18, 0.01≤c1<0.18, 0.01≤c1<0.17, 0.01≤c1<0.15 , 0.01≤c1<0.12, or 0.01≤c1<0.10.

d1 indicates a molar ratio of M¹ among all metals excluding lithium in the lithium nickel-based oxide, and may satisfy 0≤d1<0.2, 0≤d1<0.18, 0≤d1<0.17, 0≤d1<0.15, 0≤d1<0.12, or 0≤d1<0.10.

Meanwhile, the positive electrode active material, as needed, may further include a coating layer on a surface of the lithium nickel-based oxide.

The coating layer may include a coating element M², and the coating element M² may be, for example, at least one selected from the group consisting of Al, B, Co, W, Mg, V, Ti, Zn, Ga, In, Ru, Nb, Sn, Sr, and Zr. The coating layer may be formed through various coating methods known in the art, for example methods such as dry coating, wet coating, chemical vapor deposition (CVD), physical vapor deposition (PVD), or atomic layer deposition (ALD).

The shape of the positive electrode active material is not particularly limited, and for example, the positive electrode active material may be in the form of secondary particles in which tens to hundreds of primary particles are aggregated, or in the form of single particles composed of 10 or less primary particles, or a combination thereof. When the positive electrode active material is in the form of secondary particles, primary particles may have an average particle diameter of 0.05 um to 4 µm, specifically the primary particles may have an average particle diameter of 0.05 um to 0.1 um, and the primary particles may have an average particle diameter of 4 um or less, 3 um or less, or 2 um or less. When the average particle diameter of the primary particles is too large, a rock salt phase may be formed to reduce resistance characteristics and lifespan characteristics, and when the average particle diameter of the primary particles is too small, an area in contact with an electrolyte increases to cause degradation faster. In addition, the secondary particles may have an average particle diameter of 2 um to 25 um, specifically 2 um or more, 3 um or more, or 4 um or more, and 25 um or less, 20 um or less, or 18 um or less. When the average particle diameter of the secondary particles satisfies the above range, breakage of the positive electrode active material particles in the rolling process or deterioration in processability upon slurry preparation may be prevented. Meanwhile, when the positive electrode active material is in the form of single particles, the single particles may have an average particle diameter D₅₀ of 2 um to 10 um. Specifically, the single particles may have an average particle diameter D₅₀ of 2 um or more, 3 µm or more, 4 um or more, 5 um or more, or 6 um or more, and 10 um or less, 9 um or less, 8 um or less, or 7 um or less. When the average particle diameter D₅₀ of the single particles is too large, a lithium movement path may extend to increase resistance and output characteristics may be deteriorated, and when the average particle diameter D₅₀ of the single particles is too small, a specific surface area may become greater to increase side reactions with an electrolyte. In addition, the primary particles constituting the single particle may have an average particle diameter of 0.5 um to 4 um, specifically, 0.5 pm or more, 0.7 pm or more, 1 um or more, or 1.5 um or more, and 4 um or less, 3.5 um or less, or 3 um or less. When the average particle diameter of the primary particles constituting the single particles is too large, a lithium movement path may extend to increase resistance and output characteristics may be deteriorated, and when the average particle diameter of the primary particles constituting the single particles is too small, a specific surface area may become greater to increase side reactions with an electrolyte.

Meanwhile, the conductive material may be, for example, spherical or flaky graphite; a carbon-based material such as carbon black, acetylene black, Ketjen black, channel black, furnace black, lamp black, thermal black, carbon fiber, single-walled carbon nanotube, and multi-walled carbon nanotube; metal powder or metal fiber such as copper, nickel, aluminum, and silver; a conductive whisker such as a zinc oxide whisker and a potassium titanate whisker; a conductive metal oxide such as a titanium oxide; or a conductive polymer such as a polyphenylene derivative, and any one thereof or a mixture of two or more thereof may be used. The conductive material may be included in an amount of 0.1 wt% to 20 wt%, 1 wt% to 20 wt%, or 1 wt% to 10 wt%, with respect to a total weight of the positive electrode active material layer.

In addition, the binder may be, for example, polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), sulfonated EPDM, styrene-butadiene rubber (SBR), fluorine rubber, or various copolymers thereof, and any one thereof or a mixture of two or more thereof may be used. The binder may be included in an amount of 1 wt% to 20 wt%, 2 wt% to 20 wt%, or 2 wt% to 10 wt%, with respect to a total weight of the positive electrode active material layer.

### Separator

In the lithium secondary battery of the present invention, a separator is to separate the negative electrode and the positive electrode and to provide a movement path for lithium ions. Any separator may be used without particular limitation as long as it is typically used as a separator in a lithium secondary battery. Particularly, a separator having high moisture-retention ability for an electrolyte as well as low resistance to the movement of electrolyte ions is preferable. Specifically, a porous polymer film, for example, a porous polymer film manufactured using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a typical porous non-woven fabric, for example, a non-woven fabric formed of glass fiber having a high melting point, polyethylene terephthalate fiber, or the like may be used. Furthermore, a coated separator including a ceramic component or a polymer component may be used to secure heat resistance or mechanical strength, and the separator having a single-layer or multi-layer structure may be selectively used.

### Electrolyte

In addition, the electrolyte used in the present invention may be an organic liquid electrolyte, an inorganic liquid electrolyte, a solid polymer electrolyte, a gel-type polymer electrolyte, a solid inorganic electrolyte, a molten-type inorganic electrolyte, and the like, all of which may be used in the manufacturing of a lithium secondary battery, but is not limited thereto.

Specifically, the electrolyte may include an organic solvent and a lithium salt.

Any organic solvent may be used without particular limitation as long as it may serve as a medium through which ions involved in an electrochemical reaction of a battery may move. Specifically, as the organic solvent, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2 to C20 hydrocarbon group and may include a double-bond aromatic ring or ether bond); amides such as dimethylformamide; dioxolanes such as 1,3-dioxolane; or sulfolanes may be used.

Any compound may be used as the lithium salt without particular limitation as long as it may provide lithium ions used in a lithium secondary battery. To be specific, an anion of the lithium salt may be at least one selected from the group consisting of F⁻, Cl⁻, Br⁻, I⁻, NO₃⁻, N(CN)₂⁻, BF₄⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N-, and as the lithium salt, LiPF₆, LiN(FSO₂)₂, LiClO₄, LiAsF₆, LiBF₄, LiSbF₆, LiAlO₄, LiAlCl₄, LiCF₃SO₃, LiC₄F₉SO₃, LiN (C₂F₅SO₃)₂, LiN(C₂F₅SO₂)₂, LiN (CF₃SO₂)₂. LiCl, LiI, or LiB(C₂O₄)₂ may be used. The lithium salt may be used in a concentration range of 0.1 M to 5.0 M.

In addition, additives may be included in the electrolyte for the purpose of increasing battery life, suppressing capacity reduction, preventing gas generation, and the like. As the additive, various additives used in the art, for example, fluoroethylene carbonate (FEC), vinylene carbonate (VC), vinylethylene carbonate (VEC), ethylene sulfate (ESa), lithium difluorophosphate (LiPO2F2), lithium bisoxalatoborate (LiBOB), lithium tetrafluoro borate (LiBF4), lithium difluorooxalato borate (LiDFOB), lithium difluorobisoxalatophosphate (LiDFBP), lithium tetrafluorooxalatophosphate (LiTFOP), lithium methyl sulfate (LiMS), lithium ethyl sulfate (LiES), propanesultone (PS), propensultone (PRS), succinonitrile (SN), adiponitrile (AND), 1,3,6-hexanetricarbonitrile (HTCN), 1,4-dicyano-2-butene (DCB), fluorobenzene (FB), ethyldi(pro-2-y-1-yl) phosphate (EDP), 5-methyl-5propargyloxylcarbonyl-1,3-dioxane-2-one (MPOD), a compound represented by Formula A below (e.g., cyanoethyl polyvinyl alcohol, PVA-CN), a compound represented by Formula B (e.g., heptafluorobutyric cyanoethyl polyvinyl alcohol, PF-PVA-CN), a compound represented by Formula C (e.g., propargyl 1H-imidazole-1-carboxylate, PAC), and/or a compound represented by Formula D (e.g., arylimidazole such as C6H8N2), and the like may be used.

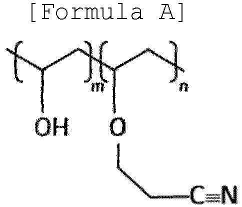

In Formula A above, m and n are each independently an integer of 1 to 100.

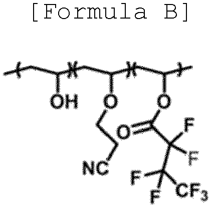

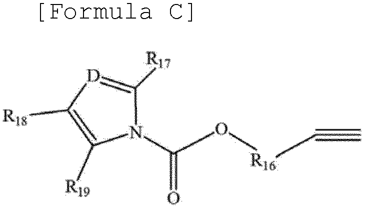

In Formula C above, R₁₆ is a linear or non-linear alkylene group having 1 to 3 carbon atoms, R₁₇ to R₁₉ are each independently at least one selected from the group consisting of hydrogen, an alkyl group having 1 to 3 carbon atoms, and - CN, and D is CH or N.

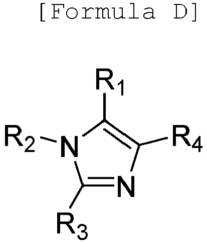

In Formula D above,

R₁ R₂, R₃, and R₄ may each independently include hydrogen; or an alkyl group having 1 to 5 carbon atoms, a cyano group (CN), an allyl group, a propargyl group, an amine group, a phosphate group, an ether group, a benzene group, a cyclohexyl group, a silyl group, an isocyanate group (-NCO), a fluorine group (-F).

Preferably, compounds acting as oxygen scavengers may be used as the additive. Phosphite-based structure materials such as tris tri(methylsilyl)phosphite (TMSPi), tris trimethylphosphite (TMPi), and tris(2,2,2-trifluoroethyl)phosphite (TTFP) (See Formula E); tris tri(methylsilyl)phosphate (TMSPa); polyphosphoric acid trimethylsilyl ester (PPSE); tris(pentafluorophenyl)borane (TPFPB); compounds including a coumarin structure such as coumarin-3-carbonitrile (CMCN), 7-ethynylcoumarin (ECM), 3-acetylcoumarin (AcCM), 3-[(trimethylsilyl)oxyl]-2H-1-benzopyran-2-one (TMSOCM), and 3-(trimethylsilyl)coumarin (TMSCM) (See Formula F); 3-[(trimethylsilyl)oxyl]-2H-1-benzopyran-2-one (TMSOCM), 3-(2-propyn-1-yloxyl)-2H-1-benzopyran-2-one (POCM), 2-propyn-1-yl-2-oxo-2H-1-benzopyran-3-carboxylate (OBCM), and the like may be used as the compounds acting as oxygen scavengers.

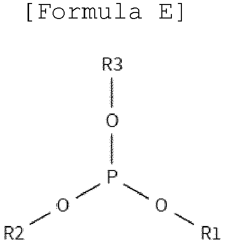

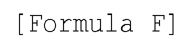

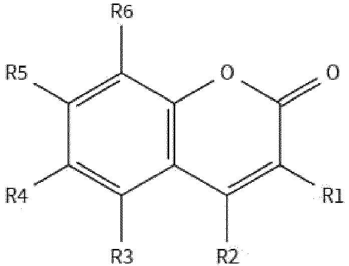

In Formulas E and F above, R1 to R6 may each independently include a substituted or unsubstituted alkenyl group having 2 to 20 carbon atoms and a substituted or unsubstituted alkynyl group having 2 to 20 carbon atoms, a cyano group (-CN), a fluoro group (F), an ether group (C-O-C), a carboxyl group (O-C=O), a trimethylsilyl group (-TMS), an isocyanate group (-NCO), and/or an isothiocyanate group (-NCS).

Hereinafter, the present invention will be described in more detail through specific examples.

### Preparation Example 1

### <Preparation of Positive Electrode>

A positive electrode active material, a conductive material, and a PVDF binder were mixed in N-methylpyrrolidone in a weight ratio of 97.7 : 0.9 : 1.4 to prepare a positive electrode slurry. In this case, LiNi_{0.86}Co_{0.05}Mn_{0.07}Al_{0.02}O₂ was used as the positive electrode active material, and CNT was used as the conductive material.

The positive electrode slurry was applied onto an aluminum collector sheet, dried, and then rolled to prepare a positive electrode having a loading amount of 4.52 mAh/cm².

### <Preparation of Negative Electrode>

A negative electrode active material, a conductive material, and an acrylic binder were mixed in water in a weight ratio of 70: 20.3: 9.7 to prepare a negative electrode slurry. In this case, Si particles having an average particle diameter of 5 um (from Elkem) were used as the negative electrode active material, and carbon black, graphite, and CNT were mixed in a weight ratio of 9.8:10:0.52 and used as the conductive material.

The negative electrode slurry was applied onto a copper collector sheet, dried, and then rolled to prepare a negative electrode having a loading amount of 8.73 mAh/cm².

### <Manufacture of Lithium Secondary Battery>

A separator was interposed between the positive electrode and the negative electrode prepared as described above to produce an electrode assembly, and the electrode assembly was inserted into a battery case. Thereafter, an electrolyte was injected to manufacture a lithium secondary battery A.

### Preparation Example 2

### <Preparation of Positive Electrode>

A positive electrode active material, a conductive material, and a PVDF binder were mixed in N-methylpyrrolidone in a weight ratio of 96.25 : 1.5 : 2.25 to prepare a positive electrode slurry. In this case, LiNi_{0.83}Co_{0.11}Mn_{0.06}O₂ was used as the positive electrode active material, and Denka Black was used as the conductive material.

The positive electrode slurry was applied onto an aluminum collector sheet, dried, and then rolled to prepare a positive electrode having a loading amount of 3.50 mAh/cm².

### <Preparation of Negative Electrode>

A negative electrode active material, a conductive material, and an acrylic binder were mixed in water in a weight ratio of 70: 20.3: 9.7 to prepare a negative electrode slurry. In this case, Si particles having an average particle diameter of 5 um (from Waker) were used as the negative electrode active material, and carbon black, graphite, and CNT were mixed in a weight ratio of 9.8:10:0.52 and used as the conductive material.

The negative electrode slurry was applied onto a copper collector sheet, dried, and then rolled to prepare a negative electrode having a loading amount of 7.36 mAh/cm².

### <Manufacture of Lithium Secondary Battery>

A separator was interposed between the positive electrode and the negative electrode prepared as described above to produce an electrode assembly, and the electrode assembly was inserted into a battery case. Thereafter, an electrolyte was injected to manufacture a lithium secondary battery B.

### Preparation Example 3

A lithium secondary battery C was manufactured in the same manner as in Preparation Example 2, except that loading amounts of the positive and negative electrodes were changed as listed in Table 1 below.

### Preparation Examples 4 to 6

Lithium secondary batteries D to F were manufactured in the same manner as in Preparation Example 1, except that loading amounts of the positive and negative electrodes were changed as listed in Table 1 below.

### Preparation Example 7

A lithium secondary battery G was manufactured in the same manner as in Preparation Example 2, except that loading amounts of the positive and negative electrodes were changed as listed in Table 1 below.

### Preparation Example 8

### <Preparation of Positive Electrode>

A positive electrode active material, a conductive material, and a PVDF binder were mixed in N-methylpyrrolidone in a weight ratio of 97.7 : 0.9 : 1.4 to prepare a positive electrode slurry. In this case, LiNi_{0.86}Co_{0.05}Mn_{0.07}Al_{0.02}O₂ was used as the positive electrode active material, and CNT was used as the conductive material.

The positive electrode slurry was applied onto an aluminum collector sheet, dried, and then rolled to prepare a positive electrode having a loading amount of 3.03 mAh/cm².

### <Preparation of Negative Electrode>

A negative electrode active material, a conductive material, and an acrylic binder were mixed in water in a weight ratio of 70: 20.3: 9.7 to prepare a negative electrode slurry. In this case, Si particles having an average particle diameter of 5 um (from Elkem) were used as the negative electrode active material, and carbon black, graphite, and CNT were mixed in a weight ratio of 9.8:10:0.52 and used as the conductive material.

The negative electrode slurry was applied onto a copper collector sheet, dried, and then rolled to prepare a negative electrode having a loading amount of 7.75 mAh/cm².

Pre-lithiation was performed by pressing lithium metal on the negative electrode, and in this case, the pre-lithiation degree was 7.38%.

### <Manufacture of Lithium Secondary Battery>

A separator was interposed between the positive electrode and the pre-lithiated negative electrode prepared as described above to produce an electrode assembly, and the electrode assembly was inserted into a battery case. Thereafter, an electrolyte was injected to manufacture a lithium secondary battery H.

### Preparation Examples 9 to 11

Lithium secondary batteries I to K were manufactured in the same manner as in Preparation Example 8, except that a loading amount of the positive electrode was changed as listed in Table 1 below.

### Preparation Example 12

A lithium secondary battery L was manufactured in the same manner as in Preparation Example 8, except that pre-lithiation was performed such that the pre-lithiation degree (%) reached 16.5% upon pre-lithiation of the negative electrode.

**The N/P ratio and Si charge depth of the lithium secondary batteries A to L manufactured as described above** are shown in Table 1 below.

**[Table 1]**

| Item | Batter y # | Positi ve electr ode loadin 9 amount (mAh/c m²) | Negati ve electr ode loadin 9 amount (mAh/c m²) | Pre-lithia tion degree (%) | NP ratio (%) | Si charge depth |
|---|---|---|---|---|---|---|
| Preparation Example 1 | A | 4.52 | 8.73 | - | 193.1 | 51.8 |
| Preparation Example 2 | B | 3.50 | 7.36 | - | 210.3 | 47.6 |
| Preparation Example 3 | C | 4.00 | 7.36 | - | 184.0 | 54.3 |
| Preparation Example 4 | D | 3.03 | 11.90 | - | 392.7 | 25.5 |
| Preparation Example 5 | E | 3.03 | 7.75 | - | 255.8 | 39.1 |
| Preparation Example 6 | F | 4.03 | 7.75 | - | 192.3 | 52.0 |
| Preparation Example 7 | G | 4.50 | 7.36 | - | 163.6 | 61.1 |
| Preparation Example 8 | H | 3.03 | 7.75 | 7.38 | 255.8 | 46.5 |
| Preparation Example 9 | I | 3.52 | 7.75 | 7.38 | 220.2 | 52.8 |
| Preparation Example 10 | J | 4.03 | 7.75 | 7.38 | 192.3 | 59.4 |
| Preparation Example 11 | K | 4.50 | 7.75 | 7.38 | 172.2 | 65.5 |
| Preparation Example 12 | L | 3.03 | 7.75 | 16.5 | 255.8 | 54.1 |

### Examples and Comparative Examples

The number of cycles up to the point where capacity retention reached 80% (the number of cycles to reach 80% life) and cell energy density were measured while charging/discharging lithium secondary batteries A to L. In this case, the charge/discharge was performed under the conditions of 25 °C, 1 C/0.5 C, CCCV mode, and the charge cut-off voltage was set to 4.2 V, and the discharge cut-off voltage was set such that the Si discharge depth had the values shown in [Table 2] below. The measurement results are shown in table 2 below. In addition, the usable SOC in the charge/discharge voltage range of each lithium secondary battery is shown in Table 2.

**[Table 2]**

| Item | Bat ter y # | Usab le SOC | NP ratio (%) | Si char ge dept h (%) | Si disc harg e dept h (%) | Si usag e rang e (%) | Cell ener gy dens ity (Wh/ L) | No. of cycl es to reac h 80% life |
|---|---|---|---|---|---|---|---|---|
| Example 1 | A | 63 | 193.1 | 51.8 | 19.2 | 32.6 | 581 | 857 |
| Example 2 | A | 69 | 193.1 | 51.8 | 16.1 | 35.7 | 631 | 690 |
| Example 3 | A | 75 | 193.1 | 51.8 | 12.9 | 38.9 | 680 | 548 |
| Example 4 | B | 65 | 210.3 | 47.6 | 16.6 | 31.0 | 595 | 530 |
| Example 5 | C | 65 | 184.0 | 54.3 | 19.0 | 35.3 | 593 | 500 |
| Example 6 | H | 85 | 255.8 | 46.5 | 13.3 | 33.2 | 629 | 481 |
| Example 7 | H | 80 | 255.8 | 46.5 | 15.2 | 31.3 | 596 | 572 |
| Example 8 | H | 70 | 255.8 | 46.5 | 19.1 | 27.4 | 529 | 784 |
| Example 9 | L | 100 | 255.8 | 54.1 | 15.0 | 39.1 | 715 | 483 |
| Comparative Example 1 | A | 91 | 193.1 | 51.8 | 4.7 | 47.1 | 805 | 320 |
| Comparative Example 2 | A | 97 | 193.1 | 51.8 | 1.6 | 50.2 | 856 | 238 |
| Comparative Example 3 | D | 100 | 392.7 | 25.5 | 0.0 | 25.5 | 659 | 148 |
| Comparative Example 4 | E | 100 | 255.8 | 39.1 | 0.0 | 39.1 | 730 | 172 |
| Comparative Example 5 | F | 100 | 192.3 | 52.0 | 0.0 | 52.0 | 847 | 150 |
| Comparative Example 6 | G | 65 | 163.6 | 61.1 | 21.4 | 39.7 | 574 | 330 |
| Comparative Example 7 | H | 100 | 255.8 | 46.5 | 7.4 | 39.1 | 723 | 289 |
| Comparative Example 8 | H | 95 | 255.8 | 46.5 | 9.4 | 37.1 | 693 | 354 |
| Comparative Example 9 | I | 100 | 220.2 | 52.8 | 7.4 | 45.4 | 770 | 199 |
| Comparative Example 10 | J | 100 | 192.3 | 59.4 | 7.4 | 52.0 | 813 | 187 |
| Comparative Example 11 | K | 100 | 172.2 | 65.5 | 7.4 | 58.1 | 841 | 110 |
| Comparative Example 12 | K | 65 | 172.2 | 65.5 | 27.7 | 37.9 | 577 | 269 |

As shown in Table 1 above, in the lithium secondary batteries of Examples 1 to 9 in which Si charge depth is 30% to 60% and Si discharge depth satisfies 10% to 20%, the number of cycles to reach 80% life was shown to be as high as 480 or more in spite of using Si as a negative electrode active material. In addition, the cell energy density was shown to be satisfactory as 500 Wh/L or more. In contrast, in Comparative Examples 1 to 12, in which either the Si charge depth or the Si discharge depth is outside the range of the present invention, it is seen that capacity characteristics were shown to be excellent, but the number of cycles to reach 80% life was significantly reduced.

## Claims

1. A lithium secondary battery comprising: a negative electrode comprising a negative electrode active material; a positive electrode comprising a positive electrode active material; a separator interposed between the negative electrode and the positive electrode; and an electrolyte,
wherein the negative electrode active material comprises silicon particles, and
a Si charge depth represented by Equation 1 below is 30% to 60%, and a Si discharge depth represented by Equation 2 below is 10% or greater, Si charge depth (%) = {(positive electrode loading amount+ pre-lithiation capacity of negative electrode)/negative electrode loading amount} ×100
wherein in Equation 1 above, the positive electrode loading amount indicates capacity per unit area of the positive electrode (unit: mAh/cm²), the negative electrode loading amount indicates capacity per unit area of the negative electrode (unit: mAh/cm²), and the pre-lithiation capacity of the negative electrode indicates capacity per unit area (unit: mAh/cm²) of lithium (Li) inserted into the negative electrode through pre-lithiation; and Si discharge depth (%) = {(positive electrode loading amount + pre-lithiation capacity of negative electrode - discharge loading amount)/negative electrode loading amount} ×100
where in Equation 2 above, the positive electrode loading amount indicates capacity per unit area of the positive electrode (unit: mAh/cm²), the negative electrode loading amount indicates capacity per unit area of the negative electrode (unit: mAh/cm²), the pre-lithiation capacity of the negative electrode indicates capacity per unit area (unit: mAh/cm²) of lithium (Li) inserted into the negative electrode through pre-lithiation, and the discharge loading amount indicates a value obtained by dividing discharge capacity of a secondary battery by positive electrode area at discharge cut-off voltage.

2. The lithium secondary battery of claim 1, wherein the negative electrode active material is formed of silicon particles.

3. The lithium secondary battery of claim 1, wherein the Si charge depth is 40% to 60%.

4. The lithium secondary battery of claim 1, wherein the Si discharge depth is 10% to 30%.

5. The lithium secondary battery of claim 1, wherein the lithium secondary battery has a Si usage range of 10% to 50%, where the Si usage range is represented by Equation 3 below: Si usage range (%) = Si charge depth - Si discharge depth.

6. The lithium secondary battery of claim 1, wherein the lithium secondary battery has an N/P ratio, which is a percentage of negative electrode loading amount to positive electrode loading amount, of 150% to 300%.

7. The lithium secondary battery of claim 1, wherein the lithium secondary battery has an N/P ratio, which is a percentage of negative electrode loading amount to positive electrode loading amount, of 180% to 300%.

8. The lithium secondary battery of claim 1, wherein the negative electrode is a pre-lithiated negative electrode, and has a pre-lithiation degree of 5% to 50%, where the pre-lithiation degree is represented by Equation 4 below: pre-lithiation degree (%) = {capacity per unit area of Li inserted into negative electrode through pre-lithiation / capacity per unit area of Si} × 100

9. The lithium secondary battery of claim 8, wherein the pre-lithiation degree is 5% to 30%.

10. The lithium secondary battery of claim 1, wherein the positive electrode active material comprises a lithium nickel-based oxide having a nickel content of 60 mol% or greater among all metals excluding lithium.

11. The lithium secondary battery of claim 10, wherein the lithium nickel-based oxide is represented by Formula 1 below:
[Formula 1] Li₁₊ₓ₁[Niₐ₁CO_{b1}Mn_{c1}M2_{d1}]O₂
wherein in Formula 1 above, -0.2≤x1≤0.2, 0.6≤a1<1, 0<b1<0.4, 0<c1<0.4, and 0≤d1≤0.2 are satisfied, and M² is at least one selected from the group consisting of Al, B, Co, W, Mg, V, Ti, Zn, Ga, In, Ru, Nb, Sn, Sr, and Zr.

12. The lithium secondary battery of claim 1, wherein the lithium secondary battery has a cell energy density of 500 Wh/L or greater, and reaches 80% life after 450 cycles or more.

13. The lithium secondary battery of claim 1, wherein the lithium secondary battery has a cell energy density of 650 Wh/L or greater, and reaches 80% life after 480 cycles or more.

14. The lithium secondary battery of claim 1, wherein the lithium secondary battery has a cell energy density of 500 Wh/L to 600 Wh/L, and reaches 80% life after 700 cycles or more.
